# EUROPÄISCHE PATENTSCHRIFT

(11) **EP 3 419 874 B1**
(45) Veröffentlichungstag und Bekanntmachung des Hinweises auf die Patenterteilung: **27.01.2021**
(21) Anmeldenummer: 17705898.9
(22) Anmeldetag: 20.02.2017
(51) Int. Cl.: B60T 8/26, B60T 8/40

(54) **VERFAHREN ZUM BETRIEB EINER BREMSANLAGE FÜR KRAFTFAHRZEUGE UND BREMSANLAGE**
METHOD FOR OPERATING A BRAKE SYSTEM FOR MOTOR VEHICLES, AND BRAKE SYSTEM
PROCÉDÉ POUR FAIRE FONCTIONNER UN SYSTÈME DE FREINAGE POUR VÉHICULES À MOTEUR ET SYSTÈME DE FREINAGE

(30) Priorität: 26.02.2016 DE 102016203115; 18.01.2017 DE 102017200752
(43) Veröffentlichungstag der Anmeldung: 02.01.2019
(73) Patentinhaber: Continental Teves AG & Co. OHG, 60488 Frankfurt am Main (DE)
(72) Erfinder: BESIER, Marco, 65307 Bad Schwalbach (DE); ROLL, Georg, 60438 Frankfurt (DE); GRÖGER, Sascha, 65779 Kelkheim (DE); NEU, Andreas, 76773 Kuhardt (DE); HOFFMANN, Cristiano, 63477 Maintal (DE)
(86) Internationale Anmeldenummer: PCT/EP2017/053755
(87) Internationale Veröffentlichungsnummer: WO 2017/144399

(56) Entgegenhaltungen:
- WO-A1-2015/074935
- WO-A1-2015/106892
- WO-A1-2016/096531
- WO-A1-2016/139186
- DE-A1-102015 212 552

## Beschreibung

Die Erfindung betrifft ein Verfahren zum Betrieb einer Bremsanlage gemäß dem Oberbegriff von Anspruch 1 sowie eine Bremsanlage gemäß dem Oberbegriff von Anspruch 13.

Die DE 10 2015 212 552 A1 offenbart eine Bremsanlage für ein Kraftfahrzeug zur Betätigung von hydraulisch betätigbaren Radbremsen einer Vorder- und einer Hinterachse, mit einem Hauptbremssystem mit einem bremspedalbetätigbaren Hauptbremszylinder, einem dem Hauptbremszylinder zugeordneten Druckmittelvorratsbehälter, einer elektrisch steuerbaren Druckmodulationseinrichtung mit einem Einlass- und Auslassventil je Radbremse zum Einstellen radindividueller Bremsdrücke und einer ersten elektrisch steuerbaren Druckbereitstellungseinrichtung, sowie mit einer Pumpen-Ventil-Anordnung, wobei die Pumpen-Ventil-Anordnung hydraulisch zwischen die Einlassventile des Hauptbremssystems und die Radbremsen von Vorder- sowie Hinterachse geschaltet ist. Das Hauptbremssystem übernimmt den Systemdruckaufbau in einem normalen Bremsbetrieb und die Pumpen-Ventil-Anordnung ist für den Fall vorgesehen, dass die Systemdruckbereitstellungsfunktion des Hauptbremssystems ausgefallen ist. In dieser Situation übernimmt die Pumpen-Ventil-Anordnung den Druckaufbau. Genauere Details zum Betrieb der Bremsanlage werden jedoch nicht beschrieben.

In der WO 2015/106892 A1 wird eine Bremsanlage beschrieben mit vier hydraulisch betätigbaren Radbremsen für die Vorderachse und Hinterachse des Fahrzeugs, mit einer ersten Bremsensteuervorrichtung mit einer elektrisch steuerbaren Druckquelle und mit einer zweiten Bremsensteuervorrichtung, welche hydraulisch zwischen der ersten Bremsensteuervorrichtung und den Radbremsen der Vorderachse und Hinterachse angeordnet ist, wobei die zweiten Bremsensteuervorrichtung je Radbremse der Vorderachse und Hinterachse ein erstes, zwischen erster Bremsensteuervorrichtung und der Radbremse angeordnetes Ventil und eine elektrisch ansteuerbare Pumpe mit einem Sauganschluss und einem Druckanschluss umfasst, wobei der Druckanschluss mit der Radbremse verbunden ist. Im Bedarfsfall, insbesondere wenn keine hydraulischen Radbremsdrücke von dem vorgeschalteten Primärbremssystem eingeleitet werden, baut die zweite Bremsensteuervorrichtung selbständig Radbremsdrücke an allen Radbremsen von Vorder- und Hinterachse auf.

In der WO 2015/074935 A1 wird eine Bremsanlage beschrieben mit einer ersten Bremsensteuervorrichtung mit einem Bremspedal-betätigbaren Hauptbremszylinder, einer ersten elektrisch steuerbaren Druckbereitstellungseinrichtung sowie elektrisch betätigbaren Einlassventilen zum Einstellen radindividueller Bremsdrücke und elektrisch betätigbaren Ventilen zur Verbindung des Hauptbremszylinders oder der ersten elektrisch steuerbaren Druckbereitstellungseinrichtung mit den vier Radbremsen, und mit einer zweiten elektrisch steuerbaren Druckbereitstellungseinrichtung mit zwei Pumpen mit je einem Sauganschluss und einem Druckanschluss, wobei jeder der Druckanschlüsse mit zumindest einer Radbremse ohne Zwischenschaltung eines Ventils verbunden ist. Bezüglich der Betriebsweise der Bremsanlage wird beschrieben, dass in einer verstärkten Rückfallbetriebsart die Komponenten der ersten Druckbereitstellungseinrichtung stromlos bleiben. Dadurch ist der Hauptbremszylinder mit jeder der vier Radbremsen verbunden und jede Pumpe der zweiten Druckbereitstellungseinrichtung ist mit zwei der vier Radbremsen verbunden. Bei einer Betätigung des Bremspedals durch den Fahrer wird die zweite Druckbereitstellungseinrichtung angesteuert, so dass die Fahrerbetätigung der vier Radbremsen durch Förderung von Druckmittelvolumen unterstützt wird.

Es ist Aufgabe der vorliegenden Erfindung, ein Verfahren zum Betrieb einer Bremsanlage für Kraftfahrzeuge sowie eine Bremsanlage bereitzustellen, welches/welche, insbesondere wenn die elektrisch steuerbare Druckbereitstellung des Hauptbremssystems ausgefallen ist, bei einer Bremsbetätigung durch den Fahrer eine sichere und für den Fahrer komfortable Bremsung ermöglicht. Dabei soll das maximale Bremspotential, auch der Hinterachse, ausgenutzt werden bei gleichzeitigem Erhalt der Fahrzeugstabilität.

Die Aufgabe wird erfindungsgemäß durch ein Verfahren gemäß Anspruch 1 und eine Bremsanlage gemäß Anspruch 13 gelöst.

Der Erfindung liegt in Bezug auf das Verfahren der Gedanke zugrunde, dass bei Vorliegen einer vorbestimmten Bedingung des Primärbremssystems und einer Betätigung des Hauptbremszylinders durch den Fahrzeugführer ein Aufbau von Radbremsdruck an den Radbremsen der Vorderachse mittels der Pumpen-Ventil-Anordnung durchgeführt wird, wobei der mittels der Pumpen-Ventil-Anordnung eingestellte Druck größer ist als der Bremsdruck im Hauptbremszylinder, während an den Radbremsen der Hinterachse der Bremsdruck des Hauptbremszylinders anliegt. D.h. die Radbremsen der Hinterachse sind oder werden mit dem Hauptbremszylinder verbunden, so dass in den Radbremsen der Hinterachse der Bremsdruck des Hauptbremszylinders an- bzw. vorliegt.

Das erfindungsgemäße Verfahren wird in einer Bremsanlage durchgeführt, bei welcher die Pumpen-Ventil-Anordnung hydraulisch zwischen die Einlassventile des Primärbremssystems und die Radbremsen der Vorderachse geschaltet ist, wobei für jede der Radbremsen der Vorderachse ein erstes, zwischen dem entsprechenden Einlassventil des Primärbremssystems und der Radbremse angeordnetes Ventil und eine elektrisch ansteuerbare Pumpe mit einem Sauganschluss und einem Druckanschluss umfasst, wobei der Druckanschluss mit der Radbremse verbunden ist.

Der Erfindung liegt in Bezug auf die Bremsanlage der Gedanke zugrunde, dass die Pumpen-Ventil-Anordnung nur für jede Radbremse der Vorderachse ein erstes zwischen dem entsprechenden Einlassventil des Primärbremssystems und der Radbremse angeordnetes Ventil und eine elektrisch ansteuerbare Pumpe mit einem Sauganschluss und einem Druckanschluss umfasst, wobei der Druckanschluss mit der Radbremse verbunden ist. Da der Hauptbremszylinder mit den Radbremsen der Hinterachse verbunden ist, wobei diese hydraulische Verbindung im stromlosen Zustand der Bremsanlage offen ist bzw. vorliegt, liegt bei einer Betätigung des Hauptbremszylinders durch den Fahrzeugführer an den Radbremsen der Hinterachse der Bremsdruck des Hauptbremszylinders an. An den Radbremsen der Vorderachse wird bei Vorliegen einer vorbestimmten Bedingung des Primärbremssystems und einer Betätigung des Hauptbremszylinders durch den Fahrzeugführer ein Aufbau von Radbremsdruck mittels der Pumpen-Ventil-Anordnung durchgeführt, wobei der mittels der Pumpen-Ventil-Anordnung eingestellte Druck größer ist als der Bremsdruck im Hauptbremszylinder.

Die Erfindung bietet den Vorteil einer gegenüber der passiven hydraulischen Rückfallebene, in welcher die Radbremsen von Vorder- und Hinterachse mit dem Hauptbremszylinder verbunden sind und in allen Radbremsen der Bremsdruck des Hauptbremszylinders anliegt, eine verbesserte Bremswirkung. Gleichzeitig bleibt jedoch ein bekanntes und angenehmes Bremspedalgefühl für den Fahrzeugfürer, da der Hauptbremszylinder mit den Hinterachs-Radbremsen verbunden ist. Vorteilhafterweise stellt sich für den Fahrzeugführer ein im Vergleich zur passiven hydraulischen Rückfallebene kürzerer und daher komfortablerer Bremspedalweg ein, da bei Druckmodulation des Fahrzeugführers über das Bremspedal im wesentlichen nur die Hinterachs-Radbremsen Bremsflüssigkeit aus dem Hauptbremszylinder aufnehmen.

Bevorzugt ist das erste Ventil jeweils stromlos offen ausgeführt, um dem Fahrzeugführer im Falle einer vollständig fehlenden Versorgung der Bremsanlage mit elektrischer Energie eine Durchgriff auf die Radbremsen von Vorder- und Hinterachse zu ermöglichen (passive hydraulische Rückfallebene). Besonders bevorzugt ist das erste Ventil jeweils analog ansteuerbar.

Bevorzugt umfasst die Pumpen-Ventil-Anordnung je Radbremse der Vorderachse ein dem ersten Ventil parallel geschaltetes, in Richtung der Radbremse öffnendes Rückschlagventil. Hierdurch wird sichergestellt, dass für den Fall, dass der vom Fahrzeugführer eingesteuerte Hautbremszylinderdruck größer als der bei geschlossenen ersten Ventilen von den Pumpen erzeugte Druck ist, der größere Druck an den Vorderachs-Radbremsen anliegt.

Bevorzugt wird der mittels der Pumpen-Ventil-Anordnung an den Vorderradbremsen einzustellende Druck durch Multiplikation des Bremsdrucks des Hauptbremszylinders mit einem Faktor, der größer als Eins ist, bestimmt. Besonders bevorzugt beträgt der Faktor ungefähr Zwei.

Der Bremsdruck des Hauptbremszylinders wird bevorzugt durch eine in der Pumpen-Ventil-Anordnung angeordnete erste Druckerfassungseinrichtung bestimmt. So ist eine Hauptbremszylinderdruckerfassung unabhängig vom Primärbremssystem gewährleistet. Die erste Druckerfassungseinrichtung ist vorteilhafterweise hydraulisch vor einem der ersten Ventile angeordnet, so dass die Druckerfassungseinrichtung einen Eingangsdruck der Pumpen-Ventil-Anordnung erfasst.

Bevorzugt ist jeweils der Druckanschluss der Pumpe direkt mit der Radbremse verbunden, d.h. z.B. ohne Zwischenschaltung eines betätigbaren Ventils oder eines Trennkolbens. Hierdurch wird z.B. ein Staudruck verhindert.

Gemäß einer bevorzugten Ausführungsform des erfindungsgemäßen Verfahrens oder der erfindungsgemäßen Bremsanlage werden bei Vorliegen der vorbestimmten Bedingung des Primärbremssystems und der Betätigung des Hauptbremszylinders durch den Fahrzeugführer die ersten Ventile geschlossen und der Aufbau von Radbremsdruck an den Radbremsen der Vorderachse auf einen Druckwert größer als der Hauptbremszylinderdruck wird mittels der Pumpen der Pumpen-Ventil-Anordnung durchgeführt. So wird ein Abfließen von Druckmittel aus dem Hauptbremszylinder in den Vorderachs-Radbremsen verhindert.

Bevorzugt ist die vorbestimmte Bedingung des Primärbremssystems durch einen Ausfall der Druckbereitstellungseinrichtung des Primärbremssystems gegeben. Dann wird bei einer Betätigung des Hauptbremszylinders durch den Fahrzeugführer ein Aufbau von Radbremsdruck an den Vorderachs-Radbremsen mittels der Pumpen-Ventil-Anordnung durchgeführt, wobei der mittels der Pumpen-Ventil-Anordnung eingestellte Druck größer ist als der Bremsdruck im Hauptbremszylinder, während an den Hinterachs-Radbremsen der Bremsdruck des Hauptbremszylinders anliegt.

Gemäß einer bevorzugten Ausführungsform des erfindungsgemäßen Verfahrens oder der erfindungsgemäßen Bremsanlage ist je Pumpe eine Druckmittelvorratskammer in der Pumpen-Ventil-Anordnung vorgesehen. Zum Aufbau des mittels der Pumpen-Ventil-Anordnung einzustellenden Drucks wird Druckmittel von den Pumpen aus den Druckmittelvorratskammern angesaugt und in die Radbremsen der Vorderachse gefördert. Das Vorhalten von Druckmittel in der Pumpen-Ventil-Anordnung selbst erhöht die Einsatzbereitschaft und Verfügbarkeit der Pumpen-Ventil-Anordnung. Es kann so zuverlässig eine Verstärkung des Druckes für die Vorderachs-Radbremsen durchgeführt werden. Insbesondere kann so verhindert werden, dass durch eine undichte oder zerstörte hydraulische Leitung zu einem separat angeordneten Druckmittelvorratsbehälter der Bremsanlage bei Bedarf nicht genug Druckmittel für die Pumpen-Ventil-Anordnung zur Verfügung steht.

Bevorzugt sind die Druckmittelvorratskammern mit einem dem Hauptbremszylinder zugeordneten, unter Atmosphärendruck stehenden Druckmittelvorratsbehälter verbunden. So kann zusätzliches Druckmittel vom Druckmittelvorratsbehälter in die Druckmittelvorratskammern nachfließen. Besonders bevorzugt sind die Druckmittelvorratskammern über einen einzigen, d.h. gemeinsamen, Behälteranschluss der Pumpen-Ventil-Anordnung mit dem Druckmittelvorratsbehälter verbunden. So kann die Anzahl der hydraulischen Leitungen zwischen Pumpen-Ventil-Anordnung und Primärbremssystem minimiert werden.

Je Pumpe (bzw. je Radbremse der Vorderachse) ist bevorzugt der Sauganschluss der Pumpe über ein drittes Ventil mit der zugeordneten Druckmittelvorratskammer verbunden, wobei zum Aufbau des mittels der Pumpen-Ventil-Anordnung einzustellenden Drucks die ersten Ventile geschlossen und die dritten Ventile geöffnet werden. Das dritte Ventil ist besonders bevorzugt stromlos geschlossen ausgeführt.

Je Radbremse der Vorderachse (bzw. je Pumpe) ist bevorzugt ein zweites Ventil in der Pumpen-Ventil-Anordnung vorgesehen, welches in einer hydraulischen Verbindung zwischen der Radbremse und der Druckmittelvorratskammer angeordnet ist. Ein Druckabbau an einer der Radbremsen der Vorderachse wird durchgeführt, indem das zweite Ventil geöffnet wird. Besonders bevorzugt ist das zweite Ventil stromlos geschlossen ausgeführt, um im Falle eines Ausfalls der elektrischen Energieversorgung der Bremsanlage einen Aufbau von Bremsdruck in der Radbremse durch den Fahrzeugführer möglich zu machen.

Bevorzugt ist je Radbremse der Vorderachse eine zweite Druckerfassungseinrichtung in der Pumpen-Ventil-Anordnung vorgesehen, welche den Druck an der Radbremse erfasst. Der Raddruck in den Radbremsen der Vorderachse kann so radindividuell anhand der zweiten Druckerfassungseinrichtungen eingestellt oder eingeregelt werden.

Bevorzugt wird, solange keine Antiblockierregelung aktiv ist, bei Vorliegen der vorbestimmten Bedingung des Primärbremssystems und der Betätigung des Hauptbremszylinders durch den Fahrzeugführer der Aufbau von Radbremsdruck an den Vorderachs-Radbremsen mittels der Pumpen-Ventil-Anordnung durchgeführt, wobei der eingestellte Druck größer ist als der Bremsdruck im Hauptbremszylinder.

Gemäß einer Weiterbildung der Erfindung wird bei Vorliegen der vorbestimmten Bedingung des Primärbremssystems und der Betätigung des Hauptbremszylinders durch den Fahrzeugführer mittels der Pumpen-Ventil-Anordnung eine Antiblockierregelung nur an den Radbremsen der Vorderachse durchgeführt, wobei für jede der Vorderachs-Radbremsen eine ABS-Druckanforderung vorbestimmt wird. So kann der mittels der Pumpen-Ventil-Anordnung einzustellende Druck (Faktor) größer gewählt werden und dennoch das maximale Bremspotential der Hinterachse ausgenutzt werden.

Bevorzugt wird der Druck an einer der Radbremsen der Vorderachse auf die vorbestimmte ABS-Druckanforderung eingestellt, solange die ABS-Druckanforderung der Radbremse größer ist als der Bremsdruck im Hauptbremszylinder. Der an der Radbremse eingestellte Druck ist dabei besonders bevorzugt stets um einen vorgegebenen Betrag größer als der Bremsdruck im Hauptbremszylinder.

Bevorzugt wird der Druck an einer der Radbremsen der Vorderachse auf den Bremsdruck im Hauptbremszylinder eingestellt, wenn die ABS-Druckanforderung der Radbremse kleiner ist als der Bremsdruck im Hauptbremszylinder.

Hierdurch wird eine limitierte ABS-Regelung an der Vorderachse für Fahrerbremsungen in der Rückfallebene erzielt. Dies führt zu einer sicheren Bremsung.

Bevorzugt umfasst die Bremsanlage eine erste, dem Primärbremssystem zugeordnete, erste elektronische Steuer- und Regeleinheit.

Die hydraulischen Komponenten der Pumpen-Ventil-Anordnung sind bevorzugt als eine selbständige Baugruppe ausgeführt, wobei der Baugruppe eine zweite elektronische Steuer- und Regeleinheit zugeordnet ist, welche an der Baugruppe angeordnet ist.

Weitere bevorzugte Ausführungsformen der Erfindung ergeben sich aus den Ansprüchen und der nachfolgenden Beschreibung anhand von Figuren.

Es zeigen schematisch:
- Fig. 1: eine erste beispielsgemäße Bremsanlage zur Durchführung eines erfindungsgemäßen Verfahrens,
- Fig. 2: eine zweite beispielsgemäße Bremsanlage zur Durchführung eines erfindungsgemäßen Verfahrens,
- Fig. 3: eine Flussdiagramm zur Veranschaulichung eines beispielsgemäßen Verfahrens,
- Fig. 4: eine Veranschaulichung einer Druckerhöhungsfunktion gemäß eines beispielsgemäßen Verfahrens,
- Fig. 5: zeitliche Verläufe verschiedener Größen während eines beispielsgemäßen Verfahrens, und
- Fig. 6: beispielsgemäße Verläufe verschiedener Größen während eines beispielsgemäßen Verfahrens.

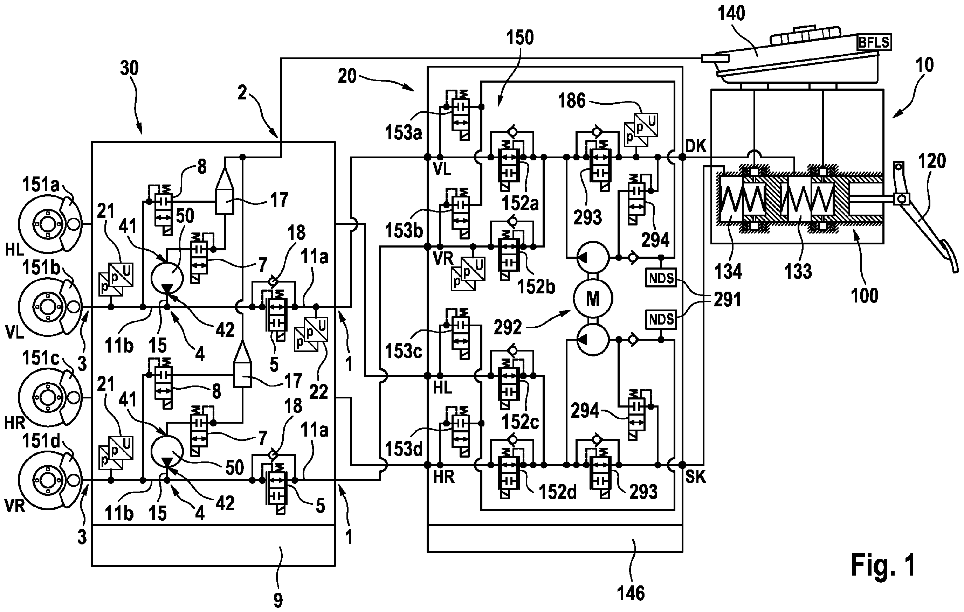

In Fig. 1 ist eine erste beispielsgemäße Bremsanlage eines Kraftfahrzeugs zur Durchführung eines erfindungsgemäßen Verfahrens schematisch dargestellt. Die Bremsanlage umfasst ein Hauptbremssystem 10, 20 (Primärbremssystem für Betriebsbremsungen) und eine elektrisch steuerbare Pumpen-Ventil-Anordnung (z.B. ein Pumpen-Ventil-Modul) 30 (Sekundärbremssystem für Betriebsbremsungen).

Das Hauptbremssystem umfasst im Wesentlichen eine Bremsbetätigung 10 mit Hauptbremszylinder 100 und ein konventionelles ESC-Modul 20 (mit einer elektrisch steuerbaren Druckbereitstellungseinrichtung), dem eine erste elektronische Steuer- und Regeleinheit 146 zugeordnet ist.

Die Bremsbetätigung 10 umfasst einen mittels eines Bremspedals 120 betätigbaren Hauptbremszylinder 100, vorzugsweise mit Druckräumen 133 und 134, wobei jedem Druckraum 133 bzw. 134 die Radbremsen einer Achse 151b, 151d (Vorderachse VA) bzw. 151a, 151c (Hinterachse HA) zugeordnet sind, und einen dem Hauptbremszylinder zugeordneten unter Atmosphärendruck stehenden Druckmittelvorratsbehälter 140. Die Radbremse 151b ist dem linken Vorderrad VL und die Radbremse 151d dem rechten Vorderrad VR zugeordnet und sind dem Bremskreis des ersten Hauptbremszylinder-Druckraums 133 zugeordnet. Die Radbremse 151a ist dem linken Hinterrad HL und die Radbremse 151c dem rechten Hinterrad HR zugeordnet und sind dem Bremskreis des zweiten Hauptbremszylinder-Druckraums 134 zugeordnet.

ESC-Modul 20 umfasst ein zweikreisiges Motor-Pumpen-Aggregat 292 mit einem Niederdruckspeicher 291 und zwei elektrisch steuerbaren Ventilen 293, 294 je Kreis sowie eine elektrisch steuerbare Druckmodulationseinrichtung 150 mit einem Einlassventil 152a-152d und einem Auslassventil 153a-153d für jede Radbremse zum Einstellen radindividueller Bremsdrücke für die Radbremsen 151a-151d.

Pumpen-Ventil-Anordnung 30 ist eine zweite elektronische Steuer- und Regeleinheit (ECU) 9 zugeordnet.

Pumpen-Ventil-Anordnung 30 ist hydraulisch zwischen dem ESC-Modul 20 und den Radbremsen der Vorderachse VA, d.h. der Radbremse 151b des linken Vorderrades VL und der Radbremse 151d des rechten Vorderrades VR, angeordnet. D.h. Anordnung 30 ist stromabwärts der entsprechenden Einlassventile 152a, 152b angeordnet.

Die radindividuellen Ausgangsanschlüsse des Hauptbremssystems sind mit den hydraulisch betätigbaren Radbremsen 151a-151d der Vorder- und Hinterachse verbunden, wobei die Einlassventile 152c, 152d der Hinterachs-Radbremsen direkt mit den Hinterachs-Radbremsen 151a, 151c verbunden sind, und die Einlassventile 152a, 152b der Vorderachs-Radbremsen über die Pumpen-Ventil-Anordnung 30 mit den Vorderachs-Radbremsen 151b, 151d verbunden sind.

Pumpen-Ventil-Anordnung 30 ist zweikreisig ausgelegt. Je Kreis umfasst die Anordnung einen ersten Anschluss 1 (Eingangsdruckanschluss, Druckeingang) zur Verbindung mit dem Hauptbremssystem und einen dritten Anschluss 3 (Ausgangsdruckanschluss, Druckabgang) zur Verbindung mit der entsprechenden Vorderradbremse 151b, 151d. Anordnung 30 umfasst einen (einzigen) zweiten Anschluss 2 (Behälteranschluss) zur Verbindung mit dem Druckmittelvorratsbehälter 140.

Je Kreis umfasst Anordnung 30 eine Pumpe 50 mit einer Saugseite 41 und einer Druckseite 42.

Die beispielgemäße zweikreisige Anordnung 30 umfasst also eine Pumpenanordnung 4 mit zwei Pumpen 50, d.h. eine einzelne Pumpe 50 je Kreis. Die zwei Pumpen 50 der Pumpenanordnung 4 werden von einem (nicht näher dargestellten) Elektromotor M gemeinsam angetrieben. Jede Pumpe 50 umfasst eine Saugseite 41 und eine Druckseite 42. Um Folgenden wird einer der Kreise der Anordnung beschrieben, der andere Kreis ist entsprechend aufgebaut.

Je Kreis umfasst Anordnung 30 ein zwischen Eingangsdruckanschluss 1 und Ausgangsdruckanschluss 3 angeordnetes, elektrisch betätigbares, erstes Ventil 5. Ventil 5 ist beispielsgemäß stromlos offen und analog ansteuerbar ausgeführt.

Das erste Ventil 5 ist in einer hydraulischen Verbindung 11 zwischen dem Eingangsdruckanschluss 1 und dem Ausgangsdruckanschluss 3 mit einem (Eingangsdruckanschluss-seitigen) Leitungsabschnitt 11a und einem (Ausgangsdruckanschluss-seitigen) Leitungsabschnitt 11b angeordnet. Dem Ventil 5 ist ein in Richtung des Ausgangsdruckanschlusses 3 öffnendes Rückschlagventil 18 parallel geschaltet.

Die Druckseite 42 der Pumpe 50 ist über einen Leitungsabschnitt 15 mit dem zugehörigen Leitungsabschnitt 11b und somit dem zugehörigen Ausgangsdruckanschluss 3 verbunden.

Leitungsabschnitt 11b ist weiterhin über ein, vorteilhafterweise stromlos geschlossenes, zweites Ventil 8 (auch Abbau-Ventil genannt) mit einer Druckmittelvorratskammer 17 der Anordnung 30 verbunden.

Die Saugseite 41 der Pumpe 50 ist über einen Leitungsabschnitt, in welchem ein, vorteilhafterweise stromlos geschlossenes, drittes Ventil 7 (sog. Pumpenventil) angeordnet ist, mit der Druckmittelvorratskammer 17 verbunden.

Druckmittelvorratskammer 17 ist über eine Nachlaufleitung mit dem zweiten Anschluss 2 (Behälteranschluss) verbunden.

Beispielsgemäß sind die Nachlaufleitungen der Druckmittelvorratskammern 17 zusammengeschaltet und gemeinsam mit dem Behälteranschluss 2 verbunden.

Gemäß dem Ausführungsbeispiel umfasst Anordnung 30 eine (einzige) Druckerfassungseinrichtung (z.B. Drucksensor) 22, welche den Druck an einem der Eingangsdruckanschlüsse 1 erfasst. Bevorzugt wird der Druck am Eingangsdruckanschluss 1 des dem ersten Druckraum des Hauptbremszylinders zugeordneten Bremskreises erfasst.

Gemäß dem Ausführungsbeispiel umfasst Anordnung 30 je Kreis bzw. je Vorderradbremse eine Druckerfassungseinrichtung (Drucksensor) 21, welche den Druck an dem Ausgangsdruckanschluss 3, d.h. den jeweiligen Radbremsdruck erfasst.

Die zweite elektronische Steuer- und Regeleinheit (ECU) 9 ist zur Ansteuerung der Pumpenanordnung 4 und der Ventile 5, 7, 8 ausgebildet. Die Signale der Druckerfassungseinrichtungen 22, 21 werden der ECU 9 zugeführt.

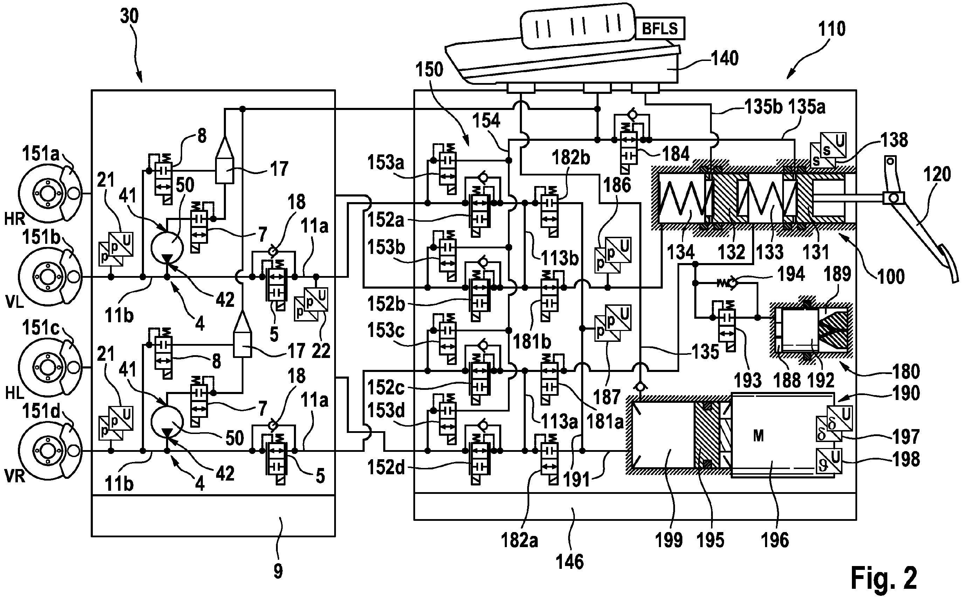

In Fig. 2 ist eine zweite beispielsgemäße Bremsanlage eines Kraftfahrzeugs zur Durchführung eines erfindungsgemäßen Verfahrens schematisch dargestellt. Die Bremsanlage umfasst ein Hauptbremssystem 110 (Primärbremssystem für Betriebsbremsungen) und eine elektrisch steuerbare Pumpen-Ventil-Anordnung 30 (Sekundärbremssystem für Betriebsbremsungen), welches wie die Pumpen-Ventil-Anordnung der Fig. 1 aufgebaut ist.

Hauptbremssystem 110 stellt eine Simulator-Bremsanlage mit im Wesentlichen einem Hauptbremszylinder 100, welcher durch ein Bremspedal 120 über eine Druckstange direkt betätigbar ist, einem dem Hauptbremszylinder 100 zugeordneten unter Atmosphärendruck stehenden Druckmittelvorratsbehälter 140, einer mit dem Hauptbremszylinder 100 zusammenwirkenden (Weg)Simulationseinrichtung 180, einer (ersten) elektrisch steuerbaren Druckbereitstellungseinrichtung 190, einer elektrisch steuerbaren Druckmodulationseinrichtung 150 zum Einstellen radindividueller Bremsdrücke für die Radbremsen 151a-151d und einer ersten elektronischen Steuer- und Regeleinheit (ECU) 146, welche zur Ansteuerung der Druckbereitstellungseinrichtung 190 und der Druckmodulationseinrichtung 150 ausgebildet ist.

Der zweikreisige Hauptbremszylinder 100 umfasst zwei hintereinander angeordnete Kolben 131, 132, die zwei hydraulische Druckräume 133, 134 begrenzen. Der erste Kolben 131 ist mechanisch mit dem Bremspedal gekoppelt und wird direkt vom Fahrzeugführer, ohne Zwischenschaltung eines Bremskraftverstärkers betätigt. Den Druckräumen 133, 134 sind Druckausgleichsleitungen 135a, 135b zum Druckmittelvorratsbehälter 140 zugeordnet. In der Druckausgleichsleitung 135a ist ein stromlos offenes (SO-) Diagnoseventil 184 enthalten.

Zur Erfassung einer Betätigung des Hauptbremszylinders 100 ist ein, vorteilhafterweise redundant ausgeführter, Wegsensor 138 vorgesehen, der z.B. eine Verschiebung des Kolben 131 und/oder 132 erfasst.

Drucksensor 186 erfasst den im Druckraum 134 durch ein Verschieben des zweiten Kolbens 132 aufgebauten Druck.

Druckmodulationseinrichtung 150 umfasst radindividuelle Einlassventile 152a-152d und Auslassventile 153a-153d. Die Eingangsanschlüsse der Einlassventile 152a-152d werden mittels Bremskreisversorgungsleitungen 113a, 113b mit Drücken versorgt, die in einer ersten Betriebsart (z.B. "Brake-by-Wire") aus einem Systemdruck abgeleitet werden, der in einer an die Druckbereitstellungseinrichtung 190 angeschlossenen Systemdruckleitung 191 vorliegt. Die hydraulische Verbindung zwischen der Systemdruckleitung 191 und der Bremskreisversorgungsleitung 113a, 113b ist mittels eines, vorteilhafterweise stromlos geschlossenen, Zuschaltventils 182a, 182b je Bremskreis trennbar. In einer zweiten Betriebsart (Rückfallbetriebsart) sind die Bremskreisversorgungsleitungen 113a, 113b über ein, vorteilhafterweise stromlos offenes, Trennventil 181a, 181b je Bremskreis mit dem zugeordneten Hauptbremszylinder-Druckraum 133, 134 verbunden. Die Ausgangsanschlüsse der Auslassventile 153a-153d sind über eine gemeinsame Rücklaufleitung 154 mit dem Druckmittelvorratsbehälter 140 verbunden.

Beispielsgemäß sind die Radbremsen 151c und 151d dem linken Hinterrad HL und dem rechten Vorderrad VR und der Bremskreisversorgungsleitung 113a sowie die Radbremsen 151a und 151b dem rechten Hinterrad HR und dem linken Vorderrad VL und der Bremskreisversorgungsleitung 113b zugeordnet. Andere Bremskreisaufteilungen sind denkbar.

Simulationseinrichtung 180 ist hydraulisch an den Hauptbremszylinder 100 ankoppelbar und besteht im Wesentlichen aus einer Simulatorkammer 188, einer Simulatorfederkammer 189 sowie einem die beiden Kammern voneinander trennenden Simulatorkolben 192. Simulatorkolben 192 stützt sich durch ein in Simulatorfederkammer 189 angeordnetes elastisches Element (z.B. eine Feder), welches vorteilhafterweise vorgespannt ist, am Gehäuse ab. Die Simulatorkammer 188 ist mittels eines elektrisch betätigbaren Simulatorfreigabeventils 193 mit dem Druckraum 133 des Hauptbremszylinders 100 verbindbar. Bei Vorgabe einer Pedalkraft und aktiviertem Simulatorfreigabeventil 193 strömt Druckmittel vom Hauptbremszylinderdruckraum 133 in die Simulatorkammer 188. Ein hydraulisch antiparallel zum Simulatorfreigabeventil 193 angeordnetes Rückschlagventil 194 ermöglicht unabhängig vom Schaltzustand des Simulatorfreigabeventils 193 ein weitgehend ungehindertes Zurückströmen des Druckmittels von der Simulatorkammer 188 zum Hauptbremszylinderdruckraum 133.

Die elektrisch steuerbare Druckbereitstellungseinrichtung 190 ist als eine hydraulische Zylinder-Kolben-Anordnung bzw. ein einkreisiger elektrohydraulischer Aktuator ausgebildet, dessen Kolben 195 von einem schematisch angedeuteten Elektromotor 196 unter Zwischenschaltung eines ebenfalls schematisch dargestellten Rotations-Translationsgetriebes betätigbar ist. Ein der Erfassung der Rotorlage des Elektromotors 196 dienender, lediglich schematisch angedeuteter Rotorlagensensor ist mit dem Bezugszeichen 197 bezeichnet. Zusätzlich kann auch ein Temperatursensor 198 zum Erfassen der Temperatur der Motorwicklung verwendet werden. Der Kolben 195 begrenzt einen Druckraum 199, welcher mit der Systemdruckleitung 191 verbunden ist. Ein Nachsaugen von Druckmittel in den Druckraum 199 ist durch ein Zurückfahren des Kolbens 195 bei geschlossenen Zuschaltventilen 182a, 182b möglich, indem Druckmittel aus dem Behälter 140 über eine Nachsaugleitung 135c mit einem in Strömungsrichtung zum Aktuator 190 öffnenden, nicht näher bezeichneten Rückschlagventil in den Akuatordruckraum 199 strömen kann. Zum Erfassen des in der Systemdruckleitung 191 herrschenden Druckes ist ein vorzugsweise redundant ausgeführter Drucksensor 187 vorgesehen.

Pumpen-Ventil-Anordnung 30 ist hydraulisch zwischen dem Hauptbremssystem 110, genauer der elektrisch steuerbaren Druckmodulationseinrichtung 150, und den Radbremsen der Vorderachse, d.h. der Radbremse 151b des linken Vorderrades VL und der Radbremse 151d des rechten Vorderrades VR, angeordnet. D.h. Anordnung 30 ist den entsprechenden Einlassventilen 152a, 152c nachgeschaltet.

Die radindividuellen Ausgangsanschlüsse des Hauptbremssystems 110 sind mit den hydraulisch betätigbaren Radbremsen 151a-151d der Vorder- und Hinterachse verbunden, wobei die Einlassventile 152b, 152d der Hinterachs-Radbremsen direkt mit den Hinterachs-Radbremsen 151a, 151c verbunden sind, und die Einlassventile 152a, 152c der Vorderachs-Radbremsen über die Pumpen-Ventil-Anordnung 30 mit den Vorderachs-Radbremsen 151b, 151d verbunden sind.

Die hydraulischen Komponenten der Bremsanlage sind beispielsgemäß in zwei hydraulischen Einheiten (Modulen) angeordnet. Jeder hydraulischen Einheit ist eine elektronische Steuer- und Regeleinheit 146, 9 zugeordnet.

Bevorzugt wird jeder der elektronischen Steuer- und Regeleinheiten 146, 9 von einer eigenen elektrischen Energieversorgung versorgt.

Insbesondere in elektrisch verstärkten Bremsanlagen ist darauf zu achten, dass eine ausreichende Verfügbarkeit gegeben ist. Eine hohe Verfügbarkeit wird bevorzugt dadurch erreicht, dass die Bremsanlage aus mindestens zwei voneinander unabhängigen elektrischen Energiequellen versorgt wird. Weiterhin werden bevorzugt die durch mögliche Ausfälle gefährdeten Komponenten wie ECUs und Aktuatoren (insbesondere elektrisch steuerbare Druckbereitstellungseinrichtungen) mehrfach ausgeführt.

Bevorzugt übernimmt ein an sich bekanntes Hauptbremssystem den Systemdruckaufbau in einem normalen Bremsbetrieb und eine Pumpen-Ventil-Anordnung ist für den Fall vorgesehen, dass die Systemdruckbereitstellungsfunktion des Hauptbremssystems ausgefallen ist. In dieser Situation übernimmt die Pumpen-Ventil-Anordnung den Druckaufbau. Die Pumpen-Ventil-Anordnung kann sowohl eine Fahrerbremsung hydraulisch verstärken als auch einen fahrerunabhängigen Druck aufbauen.

Die beschriebene Pumpen-Ventil-Anordnung 30 (z.B. das Pumpen-Ventil-Modul) wird als Ergänzung zu einem Primärbremssystem eingesetzt, welches bereits eine elektrisch steuerbare Druckbereitstellungseinrichtung umfasst. Das Pumpen-Ventil-Modul umfasst vorteilhafterweise die für eine Redundanz nötige zweite ECU und eine zweite elektrisch steuerbare Druckbereitstellungseinrichtung, so dass in der Bremsanlage zwei unabhängige ECUs und zwei unabhängige elektrisch steuerbare Druckbereitstellungseinrichtungen vorhanden sind.

Pumpen-Ventil-Anordnung 30 kann jedem beliebigen hydraulischen Primärbremssystem nachgeschaltet werden. Beispielsweise kann es, wie in Fig. 1 dargestellt, einem konventionellen Bremssystem umfassend eine Betätigung und ein Standard-ESC nachgeschaltet werden. Außerdem kann es, wie beispielsweise in Fig. 2 dargestellt, einem Simulator-Bremssystem nachgeschaltet werden.

Den Bremsanlagen ist gemein, dass in der sogenannten passiven hydraulischen Rückfallebene, wenn z.B. die elektrisch gesteuerte Druckaufbaufunktion des Primärbremssystem ausgefallen ist, der vom Fahrzeugführer im Hauptbremszylinder 100 erzeugte Bremsdruck an die Radbremsen 151a-d von Vorder- und Hinterachse weitergeleitet wird. Hier setzt die Erfindung zur Verbesserung der Bremsperformance an.

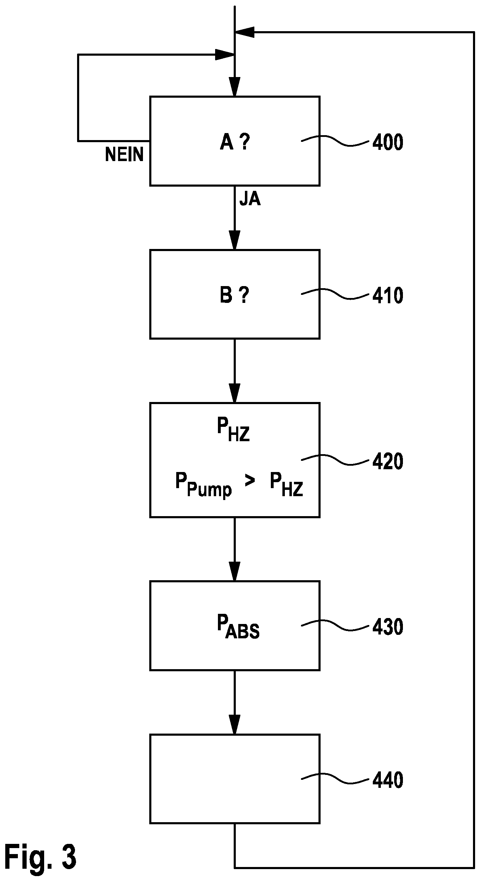

Ein stark schematisches Flussdiagramm zur Veranschaulichung eines beispielsgemäßen Verfahrens ist in Fig. 3 dargestellt. Zunächst wird in Block 400 geprüft, ob eine vorbestimmte Bedingung A des Primärbremssystems vorliegt. Insbesondere wird in Block 400 geprüft, ob die Druckbereitstellungseinrichtung des Primärbremssystems ausgefallen ist oder ob aus einem anderen Grund, mittels des Primärbremssystems kein elektrisch gesteuerter Druckaufbau möglich ist. Wenn dies der Fall ist, so wird in Block 410 überwacht, ob eine Bedingung B, nämlich eine Betätigung des Hauptbremszylinders 100 durch den Fahrzeugführer, vorliegt. Wenn dies der Fall ist, so wird in Block 420 der Bremsdruck P_{HZ} im Hauptbremszylinder 100 bestimmt, z.B. mittels des Drucksensors 22 gemessen. Es wird dann ein Aufbau von Radbremsdruck an den Radbremsen 151b, 151d der Vorderachse VA mittels der Pumpen-Ventil-Anordnung 30 durchgeführt. Die Pumpen-Ventil-Anordnung wird dazu derart angesteuert, dass der an den Radbremsen 151b, 151d eingestellte Druck Pₚᵤₘₚ größer ist als der Bremsdruck im Hauptbremszylinder P_{HZ}. An den Radbremsen 151a, 151c der Hinterachse HA liegt jedoch der Bremsdruck P_{HZ} des Hauptbremszylinders an. Es wird also nur für die Vorderachs-Radbremsen 151b, 151d eine Erhöhung des Fahrerbremsdrucks bereitgestellt.

So wird bei einem Ausfall des Primärbremssystems die Bremsperformance für pedalbetätigte Fahrerbremsungen gegenüber der passiven hydraulischen Rückfallebene verbessert, indem eine Druckverstärkung des erzeugten Fahrerbremsdruckes mit Hilfe der Pumpen-Ventil-Anordnung 30 durchgeführt wird.

Beispielsgemäß wird zur Realisierung der Druckerhöhung des vom Fahrer im Hauptbremszylinder 100 erzeugten Druckes in Block 420 der Hauptbremszylinder-Druck des Fahrers am Eingangsdrucksensor 22 der Pumpen-Ventil-Anordnung 30 erfasst und um einen geeigneten Faktor verstärkt bzw. erhöht. Hierzu werden in der Pumpen-Ventil-Anordnung 30 die ersten Ventile 5 geschlossen und die dritten Ventile 7 geöffnet, und mit Hilfe der Pumpen 50 wird Bremsflüssigkeit aus den Druckmittelvorratskammern 17 bzw. der Behälterverdingungsleitung und dem Druckmittelvorratsbehälter 140 des Primärbremssystems angesaugt und in die Radbremsen 151b, 151d der Vorderachse VA gefördert. Hierdurch baut sich in den Vorderachs-Radbremsen ein erhöhter Druck auf.

Hierbei wird also mit Hilfe der Pumpen-Ventil-Anordnung 30 an den Radbremsen 151b, 151d der Vorderräder ein höherer Bremsdruck Pₚᵤₘₚ eingestellt, als vom Fahrer im Hauptbremszylinder 100 erzeugt wurde. Der Bremsdruck kann um einen beliebigen Faktor gegenüber dem Fahrer-Hauptbremszylinder-Druck P_{HZ} verstärkt bzw. erhöht werden.

Wenn der Fahrer den Hauptbremszylinderdruck P_{HZ} per Bremspedal wieder verringert, wird entsprechend von der Pumpen-Ventil-Anordnung 30 auch der Druck in den Radbremsen 151b, 151d der Vorderräder wieder reduziert. Dies geschieht beispielsgemäß mit Hilfe der zweiten Ventile 8, die Druckmittel zurück in die Vorratskammern 17 bzw. die Behälterverbindungsleitung und den Druckmittelvorratsbehälter 140 ablassen. Mit Hilfe der Radkreisdrucksensoren 21 kann hierbei der jeweilige Radbremsdruck gemessen werden. Da die genannten Ventile, Pumpen und Sensoren je Radbremskreis vorhanden sind, kann radweise ein unterschiedlicher Druck eingestellt werden, wenn gewünscht. Die Radkreisdrucksensoren 21 können außerdem zur genaueren Regelung des Radbremsdruckes genutzt werden.

Sobald beim beispielsgemäßen Verfahren der Druck in den Vorderradbremsen 151b, 151d höher ist als der Hauptbremszylinderdruck P_{HZ}, fließt kein Druckmittelvolumen mehr vom Hauptbremszylinder 100 in die Vorderradbremskreise, da in diesen Radbremskreisen bis zu den ersten Ventilen 5 ein höherer Druck herrscht. Daher fließt bei Druckmodulation des Fahrers im Hauptbremszylinder 100 per Bremspedal 120 das Druckmittel also nur noch in die Radbremsen 151a, 151c der Hinterräder HR, HL bzw. Hinterachse HA. Die Pedalhaptik wird also in dieser Zeit nur noch durch die Radbremsen 151a, 151c der Hinterachse erzeugt. Hierdurch stellt sich ein kürzerer Bremspedalweg gegenüber der passiven hydraulischen Rückfallebene ein. Dies ist für den Fahrer haptisch vorteilhaft, da er das Bremspedal bei gleicher Fahrzeugverzögerung nicht so weit betätigen muss. In den Vorderradbremsen 151b, 151d kann hierbei also ein hoher Bremsdruck erzeugt werden, ohne viel Druckmittelvolumen aus dem Hauptbremszylinder 100 zu nutzen, da der Großteil des Druckmittelvolumens zur Druckerzeugung in den Vorderradbremsen 151b, 151d aus den Vorratskammern 17 bzw. dem Behälter 140 angesaugt wird.

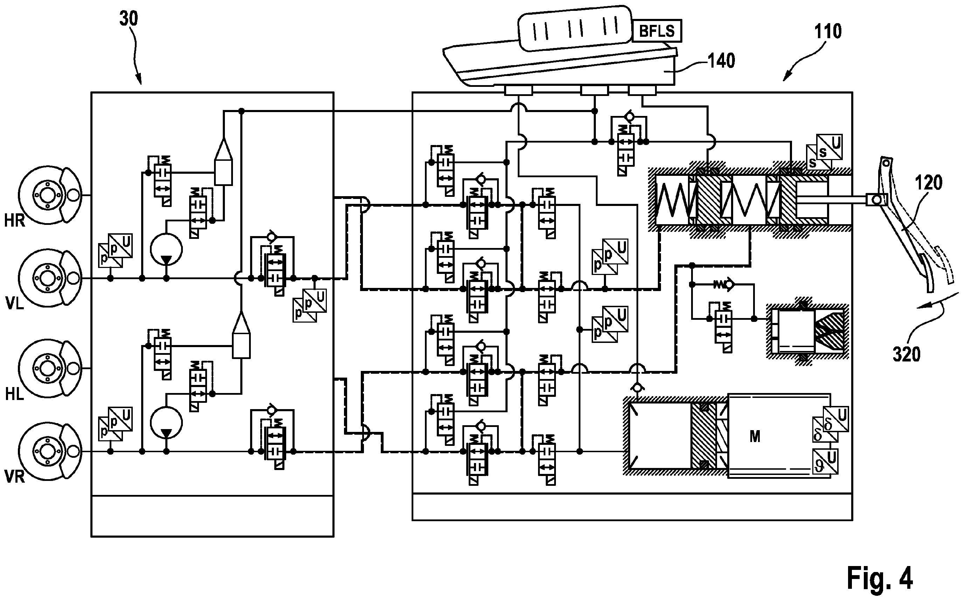

In Fig. 4 wird anhand der zweiten beispielsgemäßen Bremsanlage eine Druckerhöhungsfunktion bei Fahrerbetätigung (gekennzeichnet durch den Pfeil 320) gemäß eines beispielsgemäßen Verfahrens veranschaulicht. Die durchgezogenen Linien stellen den mittels der Anordnung 30 erhöhten Druck (Pₚᵤₘₚ) dar, die gestrichelten Linien stellen den vom Fahrer eingesteuerten Druck (P_{HZ}) dar.

Der Faktor zur Fahrerdruckerhöhung beträgt vorzugsweise ungefähr zwei. Der Faktor kann aber auch im Betrieb variabel sein und natürlich je nach Fahrzeug und Bremssystemauslegung angepasst werden.

Je höher der Faktor zur Druckerhöhung an der Vorderachse VA ist, desto mehr Fahrzeugverzögerung kann der Fahrer bei gleicher Bremspedalbetätigungskraft erzeugen. Ein hoher Druckerhöhungsfaktor ist also zur Erreichung einer hohen Fahrzeugverzögerung bei relativ geringer Bremspedalbetätigungskraft vorteilhaft.

Im Zielkonflikt hierzu steht jedoch die Bremskraftverteilung des Fahrzeugs, also die Bremskraftverteilung zwischen Vorderachse VA und Hinterachse HA. Je höher der Druckerhöhungsfaktor gewählt wird, desto stärker wird die Vorderachse VA im Verhältnis zur Hinterachse HA abgebremst. Dies führt also bei einem hohen Verstärkungsfaktor dazu, dass an der Vorderachse früh die Kraftschlussgrenze der Vorderräder erreicht wird und die Vorderachse somit besonders früh im Verhältnis zur Hinterachse blockiert. Somit ist zwar die gewünschte Blockierreihenfolge der Achsen eingehalten (Vorderachse soll vor der Hinterachse blockieren), dies hat jedoch bei gewählter starker Druckerhöhung für die Vorderachs-Radbremsen 151b, 151d den Nachteil, dass dabei die Hinterachse nicht ihr volles Bremskraftpotential ausschöpft, da diese im Verhältnis zur Vorderachse hierbei deutlich unterbremst ist. An den Hinterachs-Radbremsen 151a, 151c wirkt ja nur der direkt vom Fahrer erzeugte, unverstärkte Hauptbremszylinderdruck P_{HZ}.

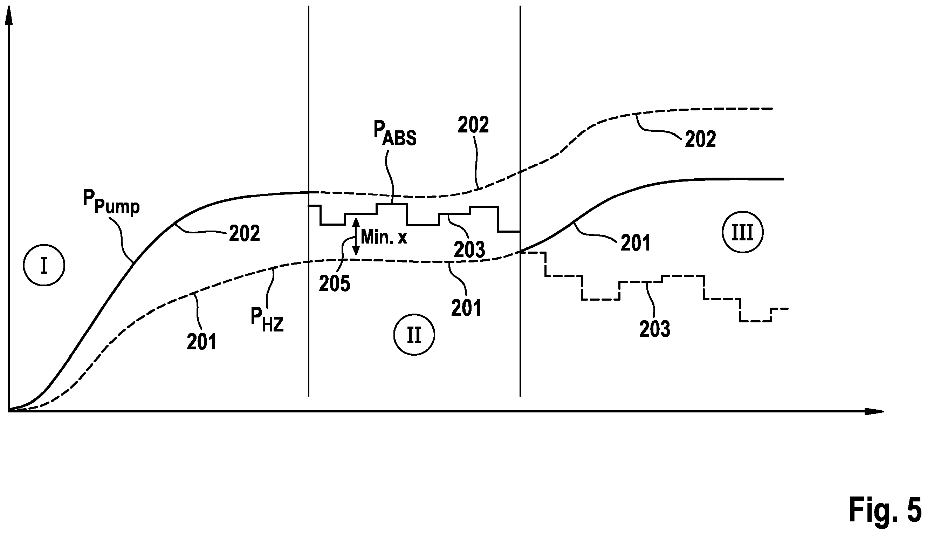

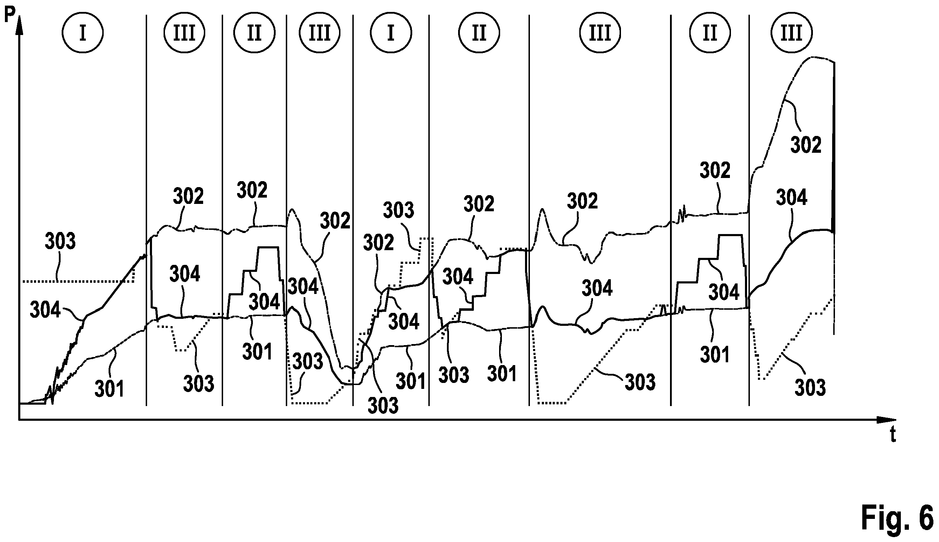

Um bei gewählter starker Druckerhöhung für die Vorderachs-Radbremsen 151b, 151d an der Hinterachse HA das maximale Bremskraftpotential möglichst gut auszunutzen, wird beispielsgemäß in Block 430 eine (limitierte) ABS-Regelung an den Radbremsen 151b, 151d der Vorderachse VA für Fahrerbremsungen in der Rückfallebene durchgeführt. Basierend auf dem Schlupf der Vorderräder wird für jede Vorderradbremse 151b, 151d eine ABS-Druckanforderung P_{ABS} der Radbremse bestimmt und eine Antiblockierregelung durchgeführt. Weitere Details dieser ABS-Regelung werden anhand von Fig. 5 und 6 näher erläutert werden.

Wenn in Block 440 erkannt wurde, dass die Bremsung durch den Fahrer beendet wurde, so wird das beispielsgemäße Verfahren beendet.

Fig. 5 zeigt zeitliche Verläufe verschiedener Größen während eines beispielsgemäßen Verfahrens. Insbesondere ist in Fig. 5 prinzipiell die Funktionsweise einer beispielsgemäßen ABS-Regelung für Fahrerbremsungen in der Rückfallebene dargestellt.

Der Verlauf des (unverstärkten) Hauptbremszylinderdrucks P_{HZ} (Fahrerdruck, driver pressure request) wird durch die Linie 201 dargestellt. Linie 202 stellt den Verlauf des mittels der Pumpen-Ventil-Anordnung (außerhalb der ABS-Regelung) grundsätzlich einzustellenden (verstärkten) Drucks Pₚᵤₘₚ (für die Vorderachs-Radbremsen) dar, welcher um einen Druckerhöhungsfaktor (factor) größer als der Hauptbremszylinderdruck P_{HZ} ist (gain pressure request, d.h. gain pressure req = driver pressure req * factor, Pₚᵤₘₚ = P_{HZ} * factor) . Der Verlauf einer ABS-Druckanforderung P_{ABS} einer Vorderachs-Radbremse wird durch die Linie 203 dargestellt.

Der Abschnitt I repräsentiert z.B. eine Fahrereingeleitete Bremsung bei Ausfall der elektrisch gesteuerten Druckbereitstellung 292, 190 des Primärbremssystems und Durchführung eines erfindungsgemäßen Verfahrens. Anhand des vom Fahrer eingesteuerten Hauptbremszylinderdrucks P_{HZ} (gestrichelte Linie 201) und dem vorgegebenen Druckerhöhungsfaktor (factor) wird der an den Vorderachs-Radbremsen einzustellende Druck Pₚᵤₘₚ bestimmt und mittels der Pumpen-Ventil-Anordnung 30 an der Radbremse der Vorderachse eingestellt (durchgezogene Linie 202). Dies geschieht solange keine Antiblockierregelung vorliegt.

In Abschnitt II ist eine Antiblockierregelung aktiv, wobei die ABS-Druckanforderung P_{ABS} für die Vorderachs-Radbremse stets größer als der Bremsdruck im Hauptbremszylinder P_{HZ} ist. Der Radbremsdruck der Vorderachs-Radbremse wird dann gemäß der ABS-Druckanforderung P_{ABS} eingestellt (durchgezogenen Linie 203), um ein Blockieren der Vorderräder zu verhindern.

In Abschnitt III ist eine Antiblockierregelung aktiv, wobei die ABS-Druckanforderung P_{ABS} unter den Hauptbremszylinderdruck P_{HZ} sinkt. Wenn die Radbremsdruck-Regelung der Pumpen-Ventil-Anordnung 30 diese ABS-Druckanforderung umsetzen würde, würde der Vorderradbremsdruck unter den Hauptbremszylinderdruck absinken. Somit würde Druckmittelvolumen aus dem Hauptbremszylinder 100 über das erste Ventil 5 bzw. das parallel geschaltete Rückschlagventil 18 der Pumpen-Ventil-Anordnung 30 in den Radbremskreis strömen und durch wiederholtes Öffnen des Abbauventils 8 zum Behälter 17 oder 140 abgelassen werden. Somit würde nach und nach das Druckmittelvolumen aus dem Hauptbremszylinder 100 zu einem Behälter abgelassen und das Bremspedal 120 würde durchsinken. Beispielsgemäß wird dies, wie in Abschnitt III dargestellt, verhindert, indem die Raddruckregelung nicht der ABS-Druckanforderung P_{ABS} (Linie 203) folgt, sondern die Sollgröße für den Radbremsdruck-Regler nach unten auf den Hauptbremszylinderdruck P_{HZ} limitiert wird, d.h. es wird der Hauptbremszylinderdruck im Vorderradbremskreis umgesetzt (durchgezogene Linie 201) . Dies bedeutet, dass der Radbremsdruck an den Radbremsen 151b, 151d der Vorderachse VA mittels der Pumpen-Ventil-Anordnung 30 eingestellt wird, wobei der mittels der Pumpen-Ventil-Anordnung eingestellte Druck gleich dem Bremsdruck im Hauptbremszylinder ist. Dies geschieht bei geschlossenen ersten Ventilen 5 und durch geeignete Ansteuerung der Pumpen 50 der Pumpen-Ventil-Anordnung 30.

Das beispielsgemäße Betriebsverfahren der beschriebenen limitierten ABS-Regelung ermöglicht somit eine limitierte Schlupfregelung an der Vorderachse und verhindert daher ein relativ frühes Blockieren der Vorderräder gegenüber den Hinterrädern. Somit wird ggf. ein Problem eines zu hohen Druckerhöhungsfaktors beseitigt bzw. abgemildert und der Zielkonflikt eines wunschgemäßen hohen Druckerhöhungsfaktor für den Fahrer, um leicht eine hohe Fahrzeugverzögerung zu erreichen, gegen eine relativ zur Hinterachse stark überbremste Vorderachse gelöst bzw. stark abgemildert.

Beispielsgemäß wird die Blockierreihenfolge bzw. das Überbremsen der Vorderachse VA durch das Maß der Druckerhöhung gezielt gesteuert. Wie in Fig. 5 Abschnitt II durch den vertikalen Doppelpfeil 205 (mit der Beschriftung "Min. x) angedeutet ist, wird gezielt ein um x bar größerer Vorderradbremsdruck gegenüber dem Hauptbremszylinder- bzw. Hinterachsbremsdruck aufrecht erhalten, um sicherzustellen, dass die Vorderachse VA vor der Hinterachse HA blockiert. Dies kann insbesondere bei frontlastigen Fahrzeugen mit niedrigem Z-kritisch (Grenzwert, welcher eine maximale Abbremsung angibt, bei welcher eine Kraftschlussbeanspruchung an der Vorderachse des Fahrzeugs und eine Kraftschlussbeanspruchung an der Hinterachse des Fahrzeugs gleich sind) notwendig bzw. vorteilhaft sein.

In Fig. 6 ist ein beispielhafter Messschrieb einer beispielsgemäßen limitierten ABS-Regelung für Fahrerbremsungen in der Rückfallebene mit Nummerierung gemäß der funktionalen Abschnitte I, II, III der Fig. 5 dargestellt. Gestrichelte Linie 301 stellt den Hauptbremszylinderdruck P_{HZ} (driver pressure request) dar. Gestrich-punktete Linie 302 stellt den um den Druckerhöhungsfaktor größeren Druck Pₚᵤₘₚ (gain pressure request) dar. Gepunktete Linie 303 stellt die ABS-Druckanforderung P_{ABS} für das linke Vorderrad (abs pressure request FL) dar. Durchgezogene Linie 304 stellt den Radbremsdruck der Radbremse des linken Vorderrads (pressure FL) dar.

## Patentansprüche

1. Verfahren zum Betrieb einer Bremsanlage eines Kraftfahrzeugs mit einem Primärbremssystem (10, 20; 110) mit
• einem von einem Fahrzeugführer mittels eines Bremspedals (120) betätigbaren Hauptbremszylinder (100), welcher mit hydraulisch betätigbaren Radbremsen (151b, 151d) einer Vorderachse (VA) und mit hydraulisch betätigbaren Radbremsen (151a, 151c) einer Hinterachse (HA) verbunden ist,
• einer elektrisch steuerbaren Druckbereitstellungseinrichtung (292, 190), welche mit den Radbremsen (151b, 151d) der Vorderachse (VA) und den Radbremsen (151a, 151c) der Hinterachse (HA) verbunden ist, und
• einer elektrisch steuerbaren Druckmodulationseinrichtung (150) zum Einstellen radindividueller Bremsdrücke mit zumindest einem Einlassventil (152a-152d) für jede der Radbremsen (151a-151d),
und mit einer Pumpen-Ventil-Anordnung (30), welche hydraulisch zwischen dem Primärbremssystem (12, 20; 110) und den Radbremsen (151b, 151d) der Vorderachse (VA) angeordnet ist, **dadurch gekennzeichnet, dass**
die Pumpen-Ventil-Anordnung (30) nur je Radbremse (151b, 151d) der Vorderachse (VA) ein erstes, zwischen dem entsprechenden Einlassventil des Primärbremssystems und der Radbremse angeordnetes Ventil (5) und eine elektrisch ansteuerbare Pumpe (50) mit einem Sauganschluss (41) und einem Druckanschluss (42) umfasst, wobei der Druckanschluss (42) mit der Radbremse verbunden ist, wobei je Pumpe (50) eine Druckmittelvorratskammer (17) in der Pumpen-Ventil-Anordnung (30) vorgesehen ist und wobei zum Aufbau des mittels der Pumpen-Ventil-Anordnung einzustellenden Drucks Druckmittel von den Pumpen (50) aus den Druckmittelvorratskammern (17) angesaugt wird und in die Radbremsen der Vorderachse gefördert wird, und wobei bei Vorliegen einer vorbestimmten Bedingung (A) des Primärbremssystems und einer Betätigung des Hauptbremszylinders durch den Fahrzeugführer (B)
• ein Aufbau von Radbremsdruck an den Radbremsen (151b, 151d) der Vorderachse (VA) mittels der Pumpen-Ventil-Anordnung durchgeführt wird, wobei der mittels der Pumpen-Ventil-Anordnung eingestellte Druck (Pₚᵤₘₚ) größer ist als der Bremsdruck im Hauptbremszylinder (P_{HZ}),
• während an den Radbremsen (151a, 151c) der Hinterachse (HA) der Bremsdruck des Hauptbremszylinders (P_{HZ}) anliegt.

2. Verfahren nach Anspruch 1, **dadurch gekennzeichnet, dass** der Bremsdruck des Hauptbremszylinders (P_{HZ}) durch eine in der Pumpen-Ventil-Anordnung (30) angeordnete erste Druckerfassungseinrichtung (22), welche insbesondere hydraulisch vor einem der ersten Ventile (5) angeordnet ist, erfasst wird, und dass insbesondere der mittels der Pumpen-Ventil-Anordnung einzustellende Druck (Pₚᵤₘₚ) durch Multiplikation des erfassten Bremsdrucks mit einem Faktor, der größer als Eins ist, bestimmt wird.

3. Verfahren nach Anspruch 1 oder 2, **dadurch gekennzeichnet, dass** bei Vorliegen der vorbestimmten Bedingung (A) des Primärbremssystems und der Betätigung des Hauptbremszylinders durch den Fahrzeugführer (B) die ersten Ventile (5) geschlossen werden und der Aufbau von Radbremsdruck an den Radbremsen (151b, 151d) der Vorderachse mittels der Pumpen (50) der Pumpen-Ventil-Anordnung durchgeführt wird, und die Radbremsen (151a, 151c) der Hinterachse (HA) mit dem Hauptbremszylinder verbunden sind.

4. Verfahren nach einem der Ansprüche 1 bis 3, **dadurch gekennzeichnet, dass** die Druckmittelvorratskammern (17) mit einem dem Hauptbremszylinder zugeordneten, unter Atmosphärendruck stehenden Druckmittelvorratsbehälter (140) verbunden sind.

5. Verfahren nach einem der Ansprüche 1 bis 4, **dadurch gekennzeichnet, dass** je Pumpe (50) der Sauganschluss (41) der Pumpe über ein drittes, insbesondere stromlos geschlossen ausgeführtes, Ventil (7) mit der zugeordneten Druckmittelvorratskammer (17) verbunden ist, wobei zum Aufbau des mittels der Pumpen-Ventil-Anordnung einzustellenden Drucks die ersten Ventile (5) geschlossen und die dritten Ventile (7) geöffnet werden.

6. Verfahren nach einem der Ansprüche 1 bis 5, **dadurch gekennzeichnet, dass** je Radbremse (151b, 151d) der Vorderachse (VA) ein zweites, insbesondere stromlos geschlossen ausgeführtes, Ventil (8) in der Pumpen-Ventil-Anordnung (30) vorgesehen ist, welches in einer hydraulischen Verbindung zwischen der Radbremse und der Druckmittelvorratskammer (17) angeordnet ist, und dass ein Druckabbau an einer der Radbremsen der Vorderachse durchgeführt wird, indem das zweite Ventil (8) geöffnet wird.

7. Verfahren nach einem der Ansprüche 1 bis 6, **dadurch gekennzeichnet, dass** je Radbremse (151b, 151d) der Vorderachse (VA) eine zweite Druckerfassungseinrichtung (21) in der Pumpen-Ventil-Anordnung (30) angeordnet ist, welche den Druck an der Radbremse erfasst, und dass der Raddruck in den Radbremsen (151b, 151d) der Vorderachse (VA) radindividuell anhand der zweiten Druckerfassungseinrichtungen (21) eingestellt oder eingeregelt wird.

8. Verfahren nach einem der Ansprüche 1 bis 7, **dadurch gekennzeichnet, dass** dieses durchgeführt wird (I), solange keine Antiblockierregelung aktiv ist.

9. Verfahren nach einem der Ansprüche 1 bis 8, **dadurch gekennzeichnet, dass** bei Vorliegen der vorbestimmten Bedingung (A) des Primärbremssystems und der Betätigung des Hauptbremszylinders durch den Fahrzeugführer (B) mittels der Pumpen-Ventil-Anordnung (30) eine Antiblockierregelung nur an den Radbremsen (151b, 151d) der Vorderachse (VA) durchgeführt wird, und dass für jede der Radbremsen (151b, 151d) der Vorderachse (VA) eine ABS-Druckanforderung (P_{ABS}) vorbestimmt wird.

10. Verfahren nach Anspruch 9, **dadurch gekennzeichnet, dass** der Druck an einer der Radbremsen (151b, 151d) der Vorderachse (VA) auf die vorbestimmte ABS-Druckanforderung (P_{ABS}, 203) eingestellt wird (II), solange die ABS-Druckanforderung (P_{ABS}) der Radbremse größer ist als der Bremsdruck im Hauptbremszylinder (P_{HZ}).

11. Verfahren nach Anspruch 10, **dadurch gekennzeichnet, dass** der an der Radbremse (151b, 151d) eingestellte Druck stets um einen vorgegebenen Betrag (x) größer ist als der Bremsdruck im Hauptbremszylinder (P_{HZ}).

12. Verfahren nach einem der Ansprüche 9 bis 11, **dadurch gekennzeichnet, dass** der Druck an einer der Radbremsen (151b, 151d) der Vorderachse (VA) auf den Bremsdruck im Hauptbremszylinder (P_{HZ}, 201) eingestellt wird (III), wenn die ABS-Druckanforderung (P_{ABS}) der Radbremse kleiner ist als der Bremsdruck im Hauptbremszylinder (P_{HZ}).

13. Bremsanlage für ein Kraftfahrzeug mit einem Primärbremssystem (10, 20; 110) mit
• einem von einem Fahrzeugführer mittels eines Bremspedals (120) betätigbaren Hauptbremszylinder (100), welcher mit hydraulisch betätigbaren Radbremsen (151b, 151d) einer Vorderachse (VA) und mit hydraulisch betätigbaren Radbremsen (151a, 151c) einer Hinterachse (HA) verbunden ist,
• einer elektrisch steuerbaren Druckbereitstellungseinrichtung (292, 190), welche mit den Radbremsen (151b, 151d) der Vorderachse (VA) und mit den Radbremsen (151a, 151c) der Hinterachse (HA) verbunden ist, und
• einer elektrisch steuerbaren Druckmodulationseinrichtung (150) zum Einstellen radindividueller Bremsdrücke mit zumindest einem Einlassventil (152a-152d) für jede Radbremse (151a-151d),
und mit einer Pumpen-Ventil-Anordnung (30), welche hydraulisch zwischen dem Primärbremssystem (12, 20; 110) und den Radbremsen (151b, 151d) der Vorderachse (VA) angeordnet ist, **dadurch gekennzeichnet, dass**
die Pumpen-Ventil-Anordnung (30) nur für jede Radbremse (151b, 151d) der Vorderachse (VA) ein erstes zwischen dem entsprechenden Einlassventil des Primärbremssystems und der Radbremse angeordnetes Ventil (5) und eine elektrisch ansteuerbare Pumpe (50) mit einem Sauganschluss (41) und einem Druckanschluss (42) umfasst, wobei der Druckanschluss (42) mit der Radbremse verbunden ist, wobei je Pumpe (50) eine Druckmittelvorratskammer (17) in der Pumpen-Ventil-Anordnung (30) vorgesehen ist und wobei zum Aufbau des mittels der Pumpen-Ventil-Anordnung einzustellenden Drucks Druckmittel von den Pumpen (50) aus den Druckmittelvorratskammern (17) angesaugt wird und in die Radbremsen der Vorderachse gefördert wird, und wobei bei Vorliegen einer vorbestimmten Bedingung (A) des Primärbremssystems und einer Betätigung des Hauptbremszylinders durch den Fahrzeugführer (B) ein Aufbau von Radbremsdruck an den Radbremsen (151b, 151d) der Vorderachse (VA) mittels der Pumpen-Ventil-Anordnung durchgeführt wird, wobei der mittels der Pumpen-Ventil-Anordnung eingestellte Druck (Pₚᵤₘₚ) größer ist als der Bremsdruck im Hauptbremszylinder (P_{HZ}), während an den Radbremsen (151a, 151c) der Hinterachse (HA) der Bremsdruck des Hauptbremszylinders (P_{HZ}) anliegt.

14. Bremsanlage nach Anspruch 13, **dadurch gekennzeichnet, dass** die Druckmittelvorratskammern (17) über einen einzigen Behälteranschluss (2) der Pumpen-Ventil-Anordnung (30) mit einem dem Hauptbremszylinder zugeordneten, unter Atmosphärendruck stehenden Druckmittelvorratsbehälter (140) verbunden sind.

15. Bremsanlage nach Anspruch 13 oder 14, **dadurch gekennzeichnet, dass** je Pumpe (50) der Sauganschluss (41) der Pumpe über ein drittes, insbesondere stromlos geschlossen ausgeführtes, Ventil (7) mit der zugeordneten Druckmittelvorratskammer (17) verbunden ist.

16. Bremsanlage nach einem der Ansprüche 13 bis 15, **dadurch gekennzeichnet, dass** die Pumpen-Ventil-Anordnung (30) je Radbremse (151b, 151d) der Vorderachse (VA) ein die Radbremse mit der Druckmittelvorratskammer (17) verbindendes zweites, insbesondere stromlos geschlossen ausgeführtes, Ventil (8) umfasst.

17. Bremsanlage nach einem der Ansprüche 13 bis 16, **dadurch gekennzeichnet, dass** eine zweite, der Pumpen-Ventil-Anordnung (30) zugeordnete elektronische Steuer- und Regeleinheit (9) vorgesehen ist, in welcher ein Verfahren nach einem der Ansprüche 2 bis 12 durchgeführt wird.

## Claims

1. Method for operating a brake installation of a motor vehicle having a primary brake system (10, 20; 110) having
• a master brake cylinder (100), which is actuatable by a vehicle driver by means of a brake pedal (120) and which is connected to hydraulically actuatable wheel brakes (151b, 151d) of a front axle (VA) and to hydraulically actuatable wheel brakes (151a, 151c) of a rear axle (HA),
• an electrically controllable pressure provision device (292, 190) which is connected to the wheel brakes (151b, 151d) of the front axle (VA) and the wheel brakes (151a, 151c) of the rear axle (HA), and
• an electrically controllable pressure modulation device (150) for setting wheel-specific brake pressures, having at least one inlet valve (152a-152d) for each of the wheel brakes (151a-151d),
and having a pump-valve arrangement (30) which is arranged hydraulically between the primary brake system (12, 20; 110) and the wheel brakes (151b, 151d) of the front axle (VA),
**characterized in that**
the pump-valve arrangement (30) comprises, for each wheel brake (151b, 151d) of the front axle (VA), a first valve (5), arranged between the corresponding inlet valve of the primary brake system and the wheel brake, and an electrically activatable pump (50), with a suction port (41) and a pressure port (42), wherein the pressure port (42) is connected to the wheel brake, wherein,
for each pump (50), a pressure medium reservoir chamber (17) is provided in the pump-valve arrangement (30), and wherein, for the build-up of the pressure to be set by means of the pump-valve arrangement, pressure medium is drawn in from the pressure medium reservoir chambers (17), and conveyed into the wheel brakes of the front axle, by the pumps (50), and wherein, in the presence of a predetermined condition (A) of the primary brake system and of an actuation of the master brake cylinder by the vehicle driver (B),
• a build-up of wheel brake pressure at the wheel brakes (151b, 151d) of the front axle (VA) is performed by means of the pump-valve arrangement, wherein the pressure (Pₚᵤₘₚ) set by means of the pump-valve arrangement is higher than the brake pressure in the master brake cylinder (P_{HZ}) ,
• whereas the brake pressure of the master brake cylinder (P_{HZ}) prevails at the wheel brakes (151a, 151c) of the rear axle (HA).

2. Method according to Claim 1, **characterized in that** the brake pressure of the master brake cylinder (P_{HZ}) is determined by means of a first pressure detection device (22) which is arranged in the pump-valve arrangement (30) and which is in particular arranged hydraulically upstream of one of the first valves (5), and **in that**, in particular, the pressure (Pₚᵤₘₚ) to be set by means of the pump-valve arrangement is determined by multiplication of the detected brake pressure by a factor higher than one.

3. Method according to Claim 1 or 2, **characterized in that**, in the presence of the predetermined condition (A) of the primary brake system and of the actuation of the master brake cylinder by the vehicle driver (B), the first valves (5) are closed and the build-up of wheel brake pressure at the wheel brakes (151b, 151d) of the front axle is performed by means of the pumps (50) of the pump-valve arrangement, and the wheel brakes (151a, 151c) of the rear axle (HA) are connected to the master brake cylinder.

4. Method according to any of Claims 1 to 3, **characterized in that** the pressure medium reservoir chambers (17) are connected to a pressure medium reservoir tank (140) which is assigned to the master brake cylinder and which is at atmospheric pressure.

5. Method according to any of Claims 1 to 4, **characterized in that**, for each pump (50), the suction port (41) of the pump is connected via a third valve (7), which is in particular designed to be closed when electrically deenergized, to the associated pressure medium reservoir chamber (17), wherein, for the build-up of the pressure to be set by means of the pump-valve arrangement, the first valves (5) are closed and the third valves (7) are opened.

6. Method according to any of Claims 1 to 5, **characterized in that**, for each wheel brake (151b, 151d) of the front axle (VA), a second valve (8), which is in particular designed to be closed when electrically deenergized, is provided in the pump-valve arrangement (30), which valve is arranged in a hydraulic connection between the wheel brake and the pressure medium reservoir chamber (17), and **in that** a dissipation of pressure at one of the wheel brakes of the front axle is performed by virtue of the second valve (8) being opened.

7. Method according to any of Claims 1 to 6, **characterized in that**, for each wheel brake (151b, 151d) of the front axle (VA), a second pressure detection device (21) is arranged in the pump-valve arrangement (30), which second pressure detection device detects the pressure at the wheel brake, and **in that** the wheel pressure in the wheel brakes (151b, 151d) of the front axle (VA) is set or adjusted in a wheel-specific manner on the basis of the second pressure detection devices (21) .

8. Method according to any of Claims 1 to 7, **characterized in that** said method is performed (I) for as long as no anti-lock control operation is active.

9. Method according to any of Claims 1 to 8, **characterized in that**, in the presence of the predetermined condition (A) of the primary brake system and of the actuation of the master brake cylinder by the vehicle driver (B), by means of the pump-valve arrangement (30), an anti-lock control operation is performed only at the wheel brakes (151b, 151d) of the front axle (VA), and **in that** an ABS pressure demand (P_{ABS}) is predetermined for each of the wheel brakes (151b, 151d) of the front axle (VA).

10. Method according to Claim 9, **characterized in that** the pressure at one of the wheel brakes (151b, 151d) of the front axle (VA) is set (II) to the predetermined ABS pressure demand (P_{ABS}, 203) for as long as the ABS pressure demand (P_{ABS}) of the wheel brake is higher than the brake pressure in the master brake cylinder (P_{HZ}).

11. Method according to Claim 10, **characterized in that** the pressure set at the wheel brake (151b, 151d) is always higher, by a predefined amount (x), than the brake pressure in the master brake cylinder (P_{HZ}).

12. Method according to any of Claims 9 to 11, **characterized in that** the pressure at one of the wheel brakes (151b, 151d) of the front axle (VA) is set (III) to the brake pressure in the master brake cylinder (P_{HZ}, 201) if the ABS pressure demand (P_{ABS}) of the wheel brake is lower than the brake pressure in the master brake cylinder (P_{HZ}) .

13. Brake installation for a motor vehicle having a primary brake system (10, 20; 110) having
• a master brake cylinder (100), which is actuatable by a vehicle driver by means of a brake pedal (120) and which is connected to hydraulically actuatable wheel brakes (151b, 151d) of a front axle (VA) and to hydraulically actuatable wheel brakes (151a, 151c) of a rear axle (HA),
• an electrically controllable pressure provision device (292, 190) which is connected to the wheel brakes (151b, 151d) of the front axle (VA) and to the wheel brakes (151a, 151c) of the rear axle (HA), and
• an electrically controllable pressure modulation device (150) for setting wheel-specific brake pressures, having at least one inlet valve (152a-152d) for each wheel brake (151a-151d),
and having a pump-valve arrangement (30) which is arranged hydraulically between the primary brake system (12, 20; 110) and the wheel brakes (151b, 151d) of the front axle (VA), **characterized in that**
the pump-valve arrangement (30) comprises, only for each wheel brake (151b, 151d) of the front axle (VA), a first valve (5) arranged between the corresponding inlet valve of the primary brake system and the wheel brake and an electrically activatable pump (50) with a suction port (41) and a pressure port (42), wherein the pressure port (42) is connected to the wheel brake, wherein, for each pump (50), a pressure medium reservoir chamber (17) is provided in the pump-valve arrangement (30), and wherein, for the build-up of the pressure to be set by means of the pump-valve arrangement, pressure medium is drawn in from the pressure medium reservoir chambers (17), and conveyed into the wheel brakes of the front axle, by the pumps (50), and wherein, in the presence of a predetermined condition (A) of the primary brake system and of an actuation of the master brake cylinder by the vehicle driver (B), a build-up of wheel brake pressure at the wheel brakes (151b, 151d) of the front axle (VA) is performed by means of the pump-valve arrangement, wherein the pressure (Pₚᵤₘₚ) set by means of the pump-valve arrangement is higher than the brake pressure in the master brake cylinder (P_{HZ}), whereas the brake pressure of the master brake cylinder (P_{HZ}) prevails at the wheel brakes (151a, 151c) of the rear axle (HA).

14. Brake installation according to Claim 13, **characterized in that** the pressure medium reservoir chambers (17) are connected via a single tank port (2) of the pump-valve arrangement (30) to a pressure medium reservoir tank (140) which is assigned to the master brake cylinder and which is at atmospheric pressure.

15. Brake installation according to Claim 13 or 14, **characterized in that**, for each pump (50), the suction port (41) of the pump is connected via a third valve (7), which is in particular designed to be closed when electrically deenergized, to the associated pressure medium reservoir chamber (17).

16. Brake installation according to any of Claims 13 to 15, **characterized in that** the pump-valve arrangement (30) comprises, for each wheel brake (151b, 151d) of the front axle (VA), a second valve (8) which connects the wheel brake to the pressure medium reservoir chamber (17) and which is in particular designed to be closed when electrically deenergized.

17. Brake installation according to any of Claims 13 to 16, **characterized in that** a second electronic open-loop and closed-loop control unit (9) is provided which is assigned to the pump-valve arrangement (30) and in which a method according to any of Claims 2 to 12 is carried out.

## Revendications

1. Procédé pour faire fonctionner une installation de freinage d'un véhicule automobile comprenant un système de freinage primaire (10, 20 ; 110) avec :
- un cylindre de frein principal (100) pouvant être actionné par un conducteur du véhicule au moyen d'une pédale de frein (120), lequel est connecté à des freins de roues pouvant être actionnés hydrauliquement (151b, 151d) d'un essieu avant (VA) et à des freins de roues pouvant être actionnés hydrauliquement (151a, 151c) d'un essieu arrière (HA),
- un dispositif de fourniture de pression à commande électrique (292, 190), qui est connecté aux freins de roues (151b, 151d) de l'essieu avant (VA) et aux freins de roues (151a, 151c) de l'essieu arrière (HA), et
- un dispositif de modulation de pression à commande électrique (150) pour ajuster des pressions de frein individuelles des roues avec au moins une soupape d'admission (152a-152d) pour chacun des freins de roues (151a-151d),
et comprenant un agencement pompe-soupape (30) qui est disposé hydrauliquement entre le système de freinage primaire (12, 20 ; 110) et les freins de roues (151b, 151d) de l'essieu avant (VA),
**caractérisé en ce que**
l'agencement pompe-soupape (30) comprend seulement, pour chaque frein de roue (151b, 151d) de l'essieu avant (VA), une première soupape (5) disposée entre la soupape d'admission correspondante du système de freinage primaire et le frein de roue et une pompe à commande électrique (50) avec un raccord d'aspiration (41) et un raccord de pression (42), le raccord de pression (42) étant connecté au frein de roue,
pour chaque pompe (50), une chambre de stockage de fluide sous pression (17) étant prévue dans l'agencement pompent-soupape (30) et pour créer la pression à ajuster au moyen de l'agencement pompe-soupape, du fluide sous pression étant aspiré par les pompes (50) hors des chambres de stockage de fluide sous pression (17) et étant refoulé dans les freins de roues de l'essieu avant, et en présence d'une condition prédéterminée (A) du système de freinage primaire et d'un actionnement du cylindre de frein principal par le conducteur du véhicule (B),
- une augmentation de la pression des freins de roues étant effectuée au niveau des freins de roues (151b, 151d) de l'essieu avant (VA) au moyen de l'agencement pompe-soupape, la pression (Pₚᵤₘₚ) ajustée au moyen de l'agencement pompe-soupape étant supérieure à la pression de freinage dans le cylindre de frein principal (P_{HZ}),
- tandis que la pression de freinage du cylindre de frein principal (P_{HZ}) s'applique au niveau des freins de roues (151a, 151c) de l'essieu arrière (HA).

2. Procédé selon la revendication 1, **caractérisé en ce que** la pression de freinage du cylindre de frein principal (P_{HZ}) est détectée par un premier dispositif de détection de pression (22) disposé dans l'agencement pompe-soupape (30), lequel est notamment disposé hydrauliquement avant l'une des premières soupapes (5), et **en ce que** notamment la pression (Pₚᵤₘₚ) devant être ajustée au moyen de l'agencement pompe-soupape est déterminée par multiplication de la pression de freinage détectée par un facteur qui est supérieur à 1.

3. Procédé selon la revendication 1 ou 2, **caractérisé en ce qu'**en présence de la condition prédéterminée (A) du système de freinage primaire et de l'actionnement du cylindre de frein principal par le conducteur du véhicule (B), les premières soupapes (5) sont fermées et l'augmentation de la pression des freins de roues au niveau des freins de roues (151b, 151d) de l'essieu avant est effectuée au moyen des pompes (50) de l'agencement pompe-soupape, et les freins de roues (151a, 151c) de l'essieu arrière (HA) étant connectés au cylindre de frein principal.

4. Procédé selon l'une quelconque des revendications 1 à 3, **caractérisé en ce que** les chambres de stockage de fluide sous pression (17) sont connectées à un réservoir de fluide sous pression (140) à la pression atmosphérique, associé au cylindre de frein principal.

5. Procédé selon l'une quelconque des revendications 1 à 4, **caractérisé en ce que** pour chaque pompe (50), le raccord d'aspiration (41) de la pompe est connecté à la chambre de stockage de fluide sous pression associée (17) par le biais d'une troisième soupape (7) réalisée notamment de manière à être fermée en l'absence de courant, les premières soupapes (5) étant fermées et les troisièmes soupapes (7) étant ouvertes pour créer la pression à ajuster au moyen de l'agencement pompe-soupape.

6. Procédé selon l'une quelconque des revendications 1 à 5, **caractérisé en ce que** pour chaque frein de roue (151b, 151d) de l'essieu avant (VA), il est prévu une deuxième soupape (8) notamment réalisée de manière à être fermée en l'absence de courant, dans l'agencement pompe-soupape (30), laquelle est disposée dans une liaison hydraulique entre le frein de roue et la chambre de stockage de fluide sous pression (17), et **en ce qu'**une diminution de pression au niveau de l'un des freins de roues de l'essieu avant est obtenue en ouvrant la deuxième soupape (8).

7. Procédé selon l'une quelconque des revendications 1 à 6, **caractérisé en ce que** pour chaque frein de roue (151b, 151d) de l'essieu avant (VA), un deuxième dispositif de détection de pression (21) est disposé dans l'agencement pompe-soupape (30), lequel détecte la pression au niveau du frein de roue et **en ce que** la pression de roues dans les freins de roues (151b, 151d) de l'essieu avant (VA) est ajustée ou réglée individuellement pour chaque roue à l'aide des deuxièmes dispositifs de détection de pression (21).

8. Procédé selon l'une quelconque des revendications 1 à 7, **caractérisé en ce que** celui-ci est mis en œuvre (I) tant qu'aucun réglage d'antiblocage n'est activé.

9. Procédé selon l'une quelconque des revendications 1 à 8, **caractérisé en ce qu'en** présence de la condition prédéterminée (A) du système de freinage primaire et de l'actionnement du cylindre de frein principal par le conducteur du véhicule (B) au moyen de l'agencement pompe-soupape (30), une régulation d'antiblocage est appliquée seulement au niveau des freins de roues (151b, 151d) de l'essieu avant (VA) et **en ce que** pour chacun des freins de roues (151b, 151d) de l'essieu avant (VA), une demande de pression ABS (P_{ABS}) est prédéterminée.

10. Procédé selon la revendication 9, **caractérisé en ce que** la pression au niveau de l'un des freins de roues (151b, 151d) de l'essieu avant (VA) est ajustée (II) à la demande de pression ABS prédéterminée (P_{ABS}, 203) tant que la demande de pression ABS (P_{ABS}) du frein de roue est supérieure à la pression de freinage dans le cylindre de frein principal (P_{HZ}) .

11. Procédé selon la revendication 10, **caractérisé en ce que** la pression ajustée au niveau du frein de roue (151b, 151d) est toujours supérieure d'une valeur prédéfinie (x) à la pression de freinage dans le cylindre de frein principal (P_{HZ}).

12. Procédé selon l'une quelconque des revendications 9 à 11, **caractérisé en ce que** la pression au niveau de l'un des freins de roues (151b, 151d) de l'essieu avant (VA) est ajustée (III) à la pression de freinage dans le cylindre de frein principal (P_{HZ}, 201) lorsque la demande de pression ABS (P_{ABS}) du frein de roue est inférieure à la pression de freinage dans le cylindre de frein principal (P_{HZ}) .

13. Installation de freinage pour un véhicule automobile comprenant un système de freinage primaire (10, 20 ; 110) avec
- un cylindre de frein principal (100) pouvant être actionné par un conducteur du véhicule au moyen d'une pédale de frein (120), lequel est connecté à des freins de roues pouvant être actionnés hydrauliquement (151b, 151d) d'un essieu avant (VA) et à des freins de roues pouvant être actionnés hydrauliquement (151a, 151c) d'un essieu arrière (HA),
- un dispositif de fourniture de pression à commande électrique (292, 190), qui est connecté aux freins de roues (151b, 151d) de l'essieu avant (VA) et aux freins de roues (151a, 151c) de l'essieu arrière (HA), et
- un dispositif de modulation de pression à commande électrique (150) pour ajuster des pressions de frein individuelles des roues avec au moins une soupape d'admission (152a-152d) pour chacun des freins de roues (151a-151d),
et comprenant un agencement pompe-soupape (30) qui est disposé hydrauliquement entre le système de freinage primaire (12, 20 ; 110) et les freins de roues (151b, 151d) de l'essieu avant (VA),
**caractérisée en ce que**
l'agencement pompe-soupape (30) comprend, seulement pour chaque frein de roue (151b, 151d) de l'essieu avant (VA), une première soupape (5) disposée entre la soupape d'admission correspondante du système de freinage primaire et le frein de roue et une pompe à commande électrique (50) avec un raccord d'aspiration (41) et un raccord de pression (42), le raccord de pression (42) étant connecté au frein de roue, pour chaque pompe (50), une chambre de stockage de fluide sous pression (17) étant prévue dans l'agencement pompent-soupape (30) et pour créer la pression à ajuster au moyen de l'agencement pompe-soupape, du fluide sous pression étant aspiré par les pompes (50) hors des chambres de stockage de fluide sous pression (17) et étant refoulé dans les freins de roues de l'essieu avant, et en présence d'une condition prédéterminée (A) du système de freinage primaire et d'un actionnement du cylindre de frein principal par le conducteur du véhicule (B), une augmentation de la pression des freins de roues étant effectuée au niveau des freins de roues (151b, 151d) de l'essieu avant (VA) au moyen de l'agencement pompe-soupape, la pression (Pₚᵤₘₚ) ajustée au moyen de l'agencement pompe-soupape étant supérieure à la pression de freinage dans le cylindre de frein principal (P_{HZ}), tandis que la pression de freinage du cylindre de frein principal (P_{HZ}) s'applique au niveau des freins de roues (151a, 151c) de l'essieu arrière (HA).

14. Installation de freinage selon la revendication 13, **caractérisée en ce que** les chambres de stockage de fluide sous pression (17) sont connectées par le biais d'un raccord de récipient unique (2) de l'agencement pompe-soupape (30) à un réservoir de fluide sous pression (140) à la pression atmosphérique, associé au cylindre de frein principal.

15. Installation de freinage selon la revendication 13 ou 14, **caractérisée en ce que** pour chaque pompe (50), le raccord d'aspiration (41) de la pompe est connecté à la chambre de stockage de fluide sous pression associée (17) par le biais d'une troisième soupape (7) réalisée notamment de manière à être fermée en l'absence de courant.

16. Installation de freinage selon l'une quelconque des revendications 13 à 15, **caractérisée en ce que** l'agencement pompe-soupape (30) comprend, pour chaque frein de roue (151b, 151d) de l'essieu avant (VA), une deuxième soupape (8) notamment réalisée de manière à être fermée en l'absence de courant, reliant le frein de roue à la chambre de stockage de fluide sous pression (17).

17. Installation de freinage selon l'une quelconque des revendications 13 à 16, **caractérisée en ce qu'il** est prévu une deuxième unité de commande et de régulation électronique (9) associée à l'agencement pompe-soupape (30), dans laquelle est mis en œuvre un procédé selon l'une quelconque des revendications 2 à 12.
